# EUROPEAN PATENT APPLICATION

(11) **EP 1 653 379 A2**
(43) Date of publication of application: **03.05.2006**
(21) Application number: 05109477.9
(22) Date of filing: 12.10.2005
(51) Int. Cl.: G06F 17/30, G06N 5/00

(54) **Computer-implemented system and method for providing authoritative answers to a general information search**

(30) Priority: 29.10.2004 US 623505; 29.03.2005 US 92387
(71) Applicant: MICROSOFT CORPORATION, Redmond, WA 98052 (US)
(72) Inventor: Forrest, Brady D., Redmond, WA 98052 (US)
(74) Representative: Zimmer, Franz-Josef

(57) **Abstract**

A computer-implemented system and method provides authoritative answers, developed within a community-based question answering service to users of a general network information search. This community-based question answering service receives a question from a first user, and receives answers from community members regarding this question. The authority of the answer is then determined by members of the community and if the authority is of an acceptable level, the question together with its authoritative answer is added to a database which includes all authoritatively answered questions. The answering service has an interface that exposes the contents of this database to queries from users of the network who are not necessarily members of the answering service. In one embodiment, results from queries of the community-based database are integrated with queries of a second database of general network information. An improved general information search service is also provided that includes query results from the authoritative answers generated by the community-based answering service.

## Description

### CROSS-REFERENCE TO RELATED APPLICATIONS

This application claims the benefit of U.S. Provisional Application No. 60/623,505, filed October 29, 2004.

### STATEMENT REGARDING FEDERALLY SPONSORED RESEARCH OR DEVELOPMENT

Not applicable.

### TECHNICAL FIELD

The present invention relates generally to providing authoritative answers to questions through a computer-implemented service. More particularly, the present invention relates to an improved technique for developing a large database of authoritative answers and integrating these answers into a general information search.

### BACKGROUND OF THE INVENTION

Through the internet and other networks, there is a large amount of information available to the computer user who has a network connection. The number of web pages alone is currently estimated to be in the billions. The number of people online is estimated to be in the hundreds of millions. Search services such as Microsoft™ MSN™ Search™ provide users with a list of links to web pages based largely on text-based string matching.

Web search services provide an immediate response, but are plagued with results of questionable authority. For example, a user who wants to know "What is the best way to stop rain gutters from plugging up?" may design a query based on this question and submit it to a search service. He will find a large number of pages that do not speak authoritatively on the subject. There may be an array of pages from vendors who sell their own particular solution to the problem. There may also be some pages that incidentally mention a specific personal event. There may be some pages written by comedians making fun of the problem. There may be some pages that happen to match in specific language, though they are speaking of two or more unrelated subject areas. There may also be some pages written by experts on the subject but failing to answer the specific question because they are focused on some other aspect of the problem, but do not suggest an answer. Thus, the user spends most of his time viewing results that are of unacceptable authority. He is confronted with authority which is tarnished by sales-bias, authority similar to his own, complete lack of authority, and misdirected or cryptic authority. The user typically invests a significant amount of time on each of these responses before discarding them as having tainted authority. The root cause of this problem is that the vast majority of web pages returned by a search engine are authored by people who do not have good authority. Even when an authoritative response is encountered, even a slight difference between the user's question and the web page available may leave the user unsatisfied with the response he receives. The frequent lack of substantial contact information on web pages usually prevents the user from asking a question of the expert who authored the content in the best page that he discovers. Contact information typically allows contact with the web-page maintainer, not the expert who provided the information. Even when a direct answer is obtained over the web, it is doubtful that it is true, simply because it was found on the web. The ubiquitous lack of authority makes any answer which is eventually found on the web doubtful.

In search of a better authority experience, information seekers may join online social networks, professional networks, or "Circle of Friends" networks. These networks allow a user to post a question to a community, and to evaluate the responses that are made to his or her question. Unfortunately many of these networks suffer from privacy, isolation, limited review, and only nominal participation. If responses are held privately within the confines of the social network, it is not made available to an information search service. If the networks are centered around an isolated area of expertise, search engines are not capable of recognizing the expertise associated with such networks. Networks typically serve the experts in their area of expertise, and so the exporting of answers is hampered by limited review of answers that are provided. A typical network web-log (or blog) may not be understandable to the uninformed, and so the answers may be unintelligible to all but a person who is already an expert. If there are only a small number of active participants, as is often the case, responses are typically not timely. Due to all of these factors, a database that may be developed by such a network does not significantly benefit a general information search service. Since the authoritative information is either not known or lost, the authoritative responses are often lost amidst a vast number of non-authoritative responses by a general information search service. Nor is the use of a social network itself a satisfying solution to the online user, since the subject matter is typically limited to a particular, narrow range of questions, and/or the database is typically small. The response therefore is usually not immediate.

Attempts to provide a general authoritative database of responses to search queries have produced very limited size databases, for various reasons. Most solutions are not scalable. That is, the cost of paying researchers has been prohibitive. Some service providers have offered, for a given fee, to answer research questions authoritatively. Only a small fraction of online users choose to pay such a fee, when they can try to use a free web search service using their own labor, and so, the results of their labors do not benefit others who may have the same question. Electronic dictionary Microsoft™ Encarta™ has a feature called "Encarta Answers" which uses a database created by paid researchers that may have answered the question. Such a database is limited by the staff size which profits of sales may support. Wikipedia is a collaborative encyclopaedia that relies on volunteers to write entries, but this is not authoritative since, as they admit, anyone can edit it, and this changed information can be posted prior to review. Thus entries that are posted and indexed may be created by mischievous editors looking for notoriety. No person besides the author has necessarily viewed the entry that appears there.

Thus there is a long-standing need in the area of internet search service to reduce the amount of time that users spend assessing the authority of answers which they find available on the web. There is also a long-standing need for a system and method that is able to create a large database of authoritative answers to questions posed by users. Likewise there is a long-standing need for a method of exporting authoritative information available in community networks to a general information search service in a way that indicates authority of the provided answers.

### SUMMARY OF THE INVENTION

The present invention meets the above needs and overcomes one or more deficiencies in the prior art by providing an advantageous computer-implemented method of supplying authority association for answers available to a general information search, using a community-based answering service. This method obtains a query input from one of potentially a large number of users who access the service over a computer network, and who are not necessarily members of the community-based answering service. This query is then analyzed against a database of previously answered authoritative questions, and a result is provided to the user indicating the best content of the community database. The method is able to build new answers when the user is not satisfied with the result provided, and so the service receives a user input indicating that a question related to the query input should be posted to a community-based answering service. The method receives at least one answer from the community of members of the answering service, and determines the authority of this answer. In the event that the answer is of sufficient authority, the answer is then joined at least with its associated question and this data is then supplied as an input to a second information search result.

In another aspect of the invention, a computer implemented community-based question answering service is provided. A query input receiving component receives a query input from a first member of the service. In response to this query input, an answer receiving component receives at least one answer from a second member of the answering service. The authority of this answer is determined by an authority-assignment component. An incentive granting component provides incentives for participants for answering for answering questions well. A database of answered questions is compiled from all questions of sufficient authority as determined by the authority-assignment component. An output component in communication with this database, and with a general information search engine provides authority-associated information to the general information search engine.

According to another aspect of this invention, a computer-implemented information search service, and a method of operating this service is provided. This service contains a query input receiving component and a query result generation component. The query input receiving component receives queries from a user of the service who is not necessarily a member of the community-based service. In response to this query, the information search service supplies query results from a general information database and from a database of authoritative answers. The results from querying these two databases are combined in a result combiner for producing a query result. This query result is communicated to a user computer and presented to the user.

### BRIEF DESCRIPTION OF THE SEVERAL VIEWS OF THE DRAWINGS

The present invention is described in detail below with reference to the attached drawing figures, wherein:

FIG. 1 is a block diagram of a computing system environment suitable for use in implementing the present invention;

FIG. 2 is a block diagram illustrating an exemplary system for a computer user to interact with a community-based answering service and a general purpose search engine;

FIG. 3 is a flow diagram of a computer-implemented method of providing authority association for answers available to a general information search search, using a community-based answering service;

FIG. 4 is a block diagram of a computer-implemented, community-based question answering service; and

FIG. 5 is a block diagram of a computer-implemented information search service.

### DETAILED DESCRIPTION OF THE INVENTION

The present invention provides an improved system and method for providing a large database of authoritatively answered questions available to a user of a general information search, through the use of a community-based question answering service. An exemplary operating environment for a user of either a general information search or a community-based question answering service is provided below.

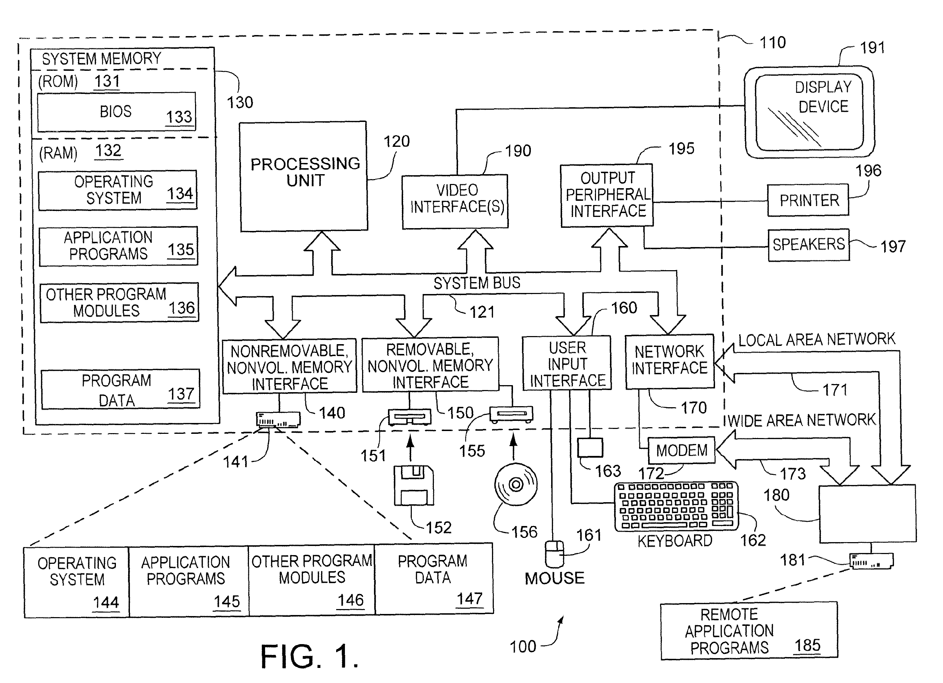

Referring to the drawings in general and initially to FIG. 1 in particular, wherein like reference numerals identify like components in the various figures, an exemplary operating environment for implementing the present invention is shown and designated generally as operating environment 100. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100. This environment is typical of a user who operates either a laptop or desktop personal computer 110 to make use of general information search or to participate in a community-based question answering service. Although they are not called "computers,", many other devices fall within the scope indicated by computer 110. A device such as a web-television, microbrowser, information appliance, web-enabled PDA, web-enabled cell-phone, web-enabled video game, smart phone, or other search capable device, may likewise make use of this invention. The ensuing discussion will refer to the exemplary device as a computer, without excluding the alternative use of any of these other devices for making us of the invention.

The invention may be described in the general context of computer-executable instructions, such as program modules, being executed by a computer. Generally, program modules include routines, programs, objects, components, data structures, etc., that perform particular tasks or implement particular abstract data types. Moreover, those skilled in the art will appreciate that the invention may be practiced with a variety of computer-system configurations, including hand-held devices, multiprocessor systems, microprocessor-based or programmable-consumer electronics, minicomputers, mainframe computers, and the like. The invention may also be practiced in distributed-computing environments where tasks are performed by remote-processing devices that are linked through a communications network. In a distributed-computing environment, program modules may be located in both local and remote computer-storage media including memory storage devices.

With reference to FIG. 1, an exemplary system 100 for implementing the invention includes a general purpose computing device in the form of a computer 110 including a processing unit 120, a system memory 130, and a system bus 121 that couples various system components including the system memory 130 to the processing unit 120.

Computer 110 typically includes a variety of computer-readable media. By way of example, and not limitation, computer-readable media may comprise computer-storage media and communication media. Examples of computer-storage media include, but are not limited to, Random Access Memory (RAM); Read-Only Memory (ROM); Electronically Erasable Programmable Read-Only Memory (EEPROM); flash memory or other memory technology; CD-ROM, digital versatile discs (DVD) or other optical or holographic disc storage; magnetic cassettes, magnetic tape, magnetic disk storage or other magnetic storage devices; or any other medium that can be used to store desired information and be accessed by computer 110. The system memory 130 includes computer-storage media in the form of volatile and/or nonvolatile memory such as ROM 131 and RAM 132. A Basic Input/Output System 133 (BIOS), containing the basic routines that help to transfer information between elements within computer 110 (such as during start-up) is typically stored in ROM 131. RAM 132 typically contains data and/or program modules that are immediately accessible to and/or presently being operated on by processing unit 120. By way of example, and not limitation, FIG. 1 illustrates operating system 134 which may include a browser, application programs 135, which also may include a browser, and other program modules 136, and program data 137.

The computer 110 may also include other removable/nonremovable, volatile/nonvolatile computer-storage media. By way of example only, FIG. 1 illustrates a hard disk drive 141 that reads from or writes to nonremovable, nonvolatile magnetic media, a magnetic disk drive 151 that reads from or writes to a removable, nonvolatile magnetic disk 152, and an optical disc drive 155 that reads from or writes to a removable, nonvolatile optical disc 156 such as a CD-ROM or other optical media. Other removable/nonremovable, volatile/nonvolatile computer-storage media that can be used in the exemplary operating environment include, but are not limited to, magnetic tape cassettes, flash memory units, digital versatile disks, digital video tape, solid state RAM, solid state ROM, and the like. The hard disk drive 141 is typically connected to the system bus 121 through a nonremovable memory interface such as interface 140. Magnetic disk drive 151 and optical disc drive 155 are typically connected to the system bus 121 by a removable memory interface, such as interface 150.

The drives and their associated computer-storage media discussed above and illustrated in FIG. 1 provide storage of computer-readable instructions, data structures, program modules and other data for computer 110. For example, hard disk drive 141 is illustrated as storing operating system 144, application programs 145, other program modules 146, and program data 147. Note that these components can either be the same as or different from operating system 134, application programs 135, other program modules 136, and program data 137. Typically, the operating system, application programs and the like that are stored in RAM are portions of the corresponding systems, programs, or data read from hard disk drive 141, the portions varying in size and scope depending on the functions desired. Operating system 144, application programs 145, other program modules 146, and program data 147 are given different numbers here to illustrate that, at a minimum, they can be different copies. A user may enter commands and information into the computer 110 through input devices such as a keyboard 162; pointing device 161, commonly referred to as a mouse, trackball or touch pad; a screen with user input capacity such as touch-screens and screens capable of receiving stylus inputs; a wireless-input-reception component 163; or a wireless source such as a remote control. Other input devices (not shown) may include a microphone, joystick, game pad, satellite dish, scanner, or the like. These and other input devices are often connected to the processing unit 120 through a user-input interface 160 that is coupled to the system bus 121 but may be connected by other interface and bus structures, such as a parallel port, game port, IEEE 1394 port, or a universal serial bus (USB), or infrared (IR) bus.

A display device 191 is also connected to the system bus 121 via an interface, such as a video interface 190. Display device 191 can be any device to display the output of computer 110 not limited to a monitor, an LCD screen, a Thin Film Transistor (TFT) screen, a flat-panel display, a conventional television, or screen projector. In addition to the display device 191, computers may also include other peripheral output devices such as speakers 197 and printer 196, which may be connected through an output peripheral interface 195.

The computer 110 in the present invention will operate in a networked environment using logical connections to one or more remote computers, such as a remote computer 180. The remote computer 180 may be a personal computer, or a server, and typically includes many or all of the elements described above relative to the computer 110, although only a memory storage device 181 has been illustrated in FIG. 1. The logical connections depicted in FIG. 1 include a local-area network (LAN) 171 and a wide-area network (WAN) 173 but may also include other networks, such as connections to a metropolitan-area network (MAN), intranet, or the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the network interface 170, or other appropriate mechanism. Modem 172 could be a cable modem, DSL modem, or other broadband device. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

Although many other internal components of the computer 110 are not shown, those of ordinary skill in the art will appreciate that such components and the interconnections are well-known. For example, including various expansion cards such as television-tuner cards and network-interface cards within a computer 110 is conventional. Accordingly, additional details concerning the internal construction of the computer 110 need not be disclosed in connection with the present invention.

Typically, when the computer 110 is turned on or reset, the BIOS 133, which is stored in ROM 131, instructs the processing unit 120 to load the operating system, or necessary portion thereof, from the hard disk drive 141 into the RAM 132. Once the copied portion of the operating system, designated as operating system 144, is loaded into RAM 132, the processing unit 120 executes the operating-system code and causes the visual elements associated with the user interface of the operating system 134 to be displayed on the display device 191. Typically, when an application program 145 is opened by a user, the program code and relevant data are read from the hard disk drive 141 and the necessary portions are copied into RAM 132, the copied portion represented herein by reference numeral 135.

As previously mentioned, the present invention may be described in the general context of computer-useable instructions. Computer-useable instructions include functions, procedures, schemas, routines, code segments, and modules useable by one or more computers or other devices. The computer-useable instructions form an interface to allow a computer to react according to a source of input. The instructions cooperate with other code segments to initiate a variety of tasks in response to data received in conjunction with the source of the received data.

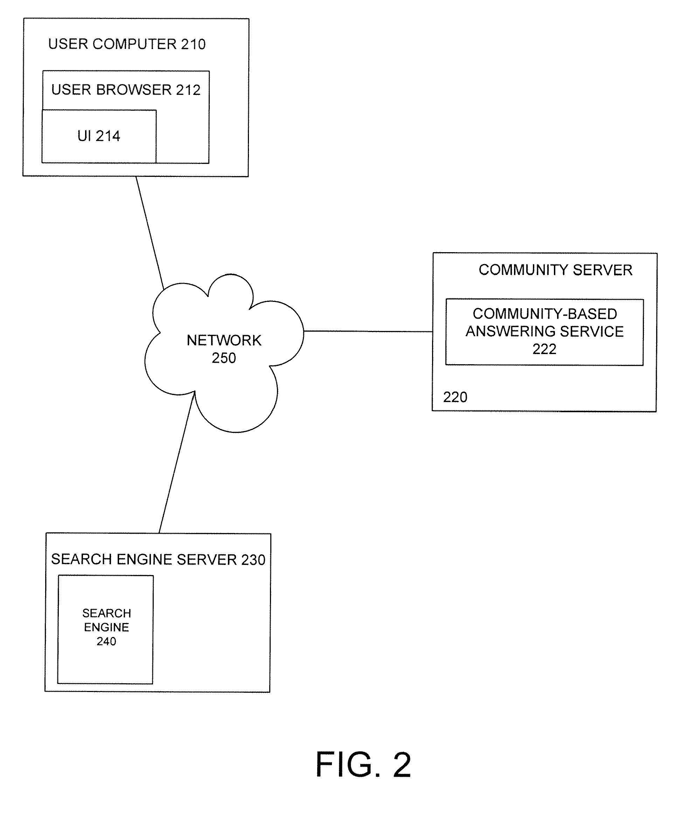

FIG. 2 illustrates an exemplary system enabling a computer user to interact through a user interface 214 with a community-based answering service 222 and a search engine 240. This interaction may be provided through a user computer 210, a community server 220 and a search engine server 230 by a network 250. A user receives and sends information through the user interface 214, typically by means of a browser 212, running on a computer 210. A communication protocol suite, perhaps including IP, and TCP, or UDP are typically provided connecting a user computer with remote servers 230 or 220. A browser 212, running on a user computer 210, may make connection to a search engine 240, running on a search engine server 230. This allows the user to perform general information searches of information generally available on the network by providing queries to the search engine 240. Such queries may, by way of example include lists of keywords or natural language questions originating from the user computer 210, These are analyzed by the search engine, and a query search result is provided in return that may prove useful to the user. This result may include a subset of links available on the network ordered in reverse estimated importance, a brief abstract of the information thought to be relevant, and other links of potential relevance. In one aspect, the present invention incorporates authoritative answers from a community based service into this query reply. A browser 212, running on a user computer 210, may also make connection to a community-based answering service 222 running on a community based server 220. This allows the user to query the database of questions stored at the community-based server 220. This invention advantageously combines the results of queries obtained from the general information search engine 240 with the results of a community-based answering service 222. This may be done for example, by integrating results from the community-based answering service 222 with the results provided from the general information search engine 240, that are provided to the user interface 214. Alternatively, the community-based answering service may integrate the results from a general information search engine 240 with those provided by the community-based answering service 222, and provide these to the user interface 214. Yet another alternative is for a third server, not shown, to provide integration of these results. Still another alternative is for the user computer 210 to generate separate queries, and integrate search results as disclosed in co-pending, commonly assigned application serial number 11/001,134, which is incorporated herein by reference. The community server 220 and the search engine server 230 are shown by way of example as separate host machines. In other embodiments the services may be hosted on the same machine, or their services may be provided by a distributed network of servers. An interface to one or more of these services may be native to an operating system, a browser, a client interface for instant messaging, a blogging platform, an aggregator, or other service client.

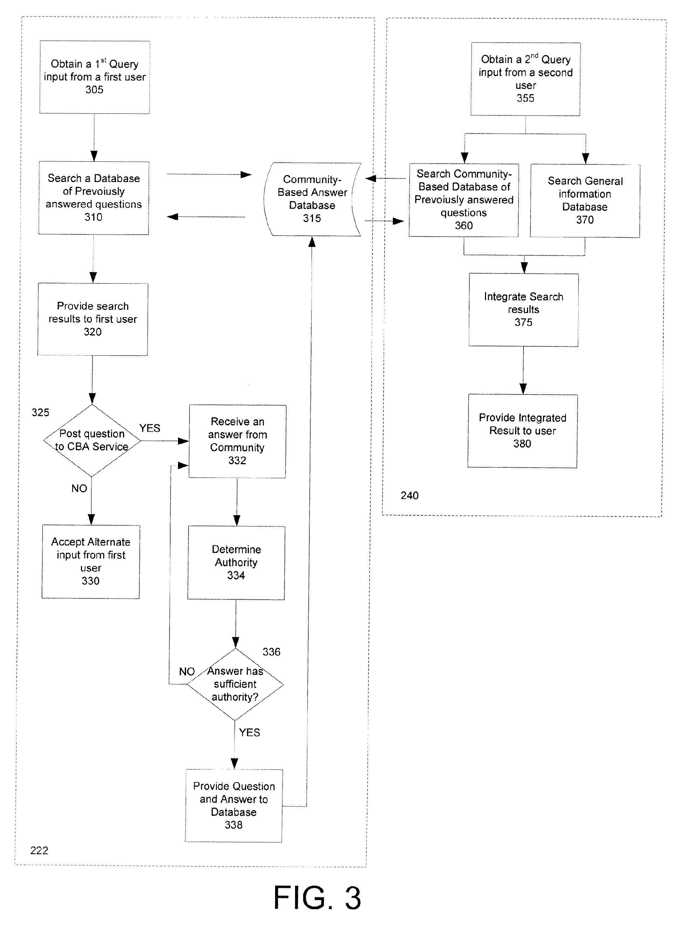

Turning now to FIG. 3, a flow diagram is shown of a computer-implemented method of providing authority association for answers available to a general information search, using a community-based answering service. At a high level of description, a community based answering service 222, provides authority associated information to a general information search service 350 within server 230, through the sharing of authority associated information in a community-based answer database 315. This high-level description considers, without loss of generality, an embodiment in which the authority based information is integrated as part of a general information search service. The general information search service 350 is able to access authoritative answers that are contained in the community-based answer database 315. The database 315, having been previously populated when, a first query input from a first user had eventually produced an authoritative question and answer to the database in step 338 as is further described below. The general information search service 350 obtains a second query input from a second user at step 355, and in turn, queries the community-based answer database 315 at step 360, and ultimately provides this information to the user at step 380, integrated at step 375 with search results obtained from a general information database at step 370. The answer will be associated with some level of authority. For example the authority association can simply indicate that the user who previously posted the question, accepted the given answer as authoritative. The authority may be further associated, by quantifying credibility that the first user places on the answer in one or more ways, within the result provided to the general information search. Examples of such quantifications may include, without limitation: grading systems, e.g. A+, A, A-, B+, B, B-, ..., etc.; fractions indicating acceptability of the reply given, e.g. 100%, 90%, 50%; ratings, e.g. number of stars out of 5; status of the person within the community who provided the answer, e.g. super-user, expert, novice, etc.; results of a community vote as to acceptability, e.g. 68%, majority, etc.; opinion of a community expert regarding the answer, e.g. excellent, good, fair, poor, etc. These quantifications of authority allow rankings to be performed among information that may be indicated to the second user. Such "soft authority" may also be used as an input for determining order or status of the presentation of alternative information to the second user.

The community-based question answering service 300 provides an advantageous method of creating a large database of authoritative answers to questions. This method provides an open user interface for the service to interact with network participants, who are not necessarily members of any communities in the answering service. The method obtains a first query input from a first user in step 305. This input may be in the form of a list of keywords, whose order may or may not indicate importance. Alternatively, this input may be a natural language question. It will be assumed without loss of generality that the user provides a natural language question. In the event that a list of keywords is obtained in step 305, a natural language question is obtained after step 325 when a positive input is indicated. The first query input is parsed to obtain a number of meaningful text-matching components. These components are used in step 310 to search the community-based answer database 315. Results of this search are provided to the first user in step 320. Typically, the query results partially match several, similar questions in the database, and these results are provided to the user ranked by relative strength of match, through some criteria, as is well known in the art. These results may also be integrated with the results of a general information search result. This is particularly advantageous when the strength of the match in the community-based answer database is weak. The invention provides the first user the opportunity to post his question to a community-based answer service in step 325. If the user elects not to post the question, the first user may select one of the links provided by the community-based answer database, or one of the links provided by a general information search result in step 330.

If the user elects to post the question to the community-based answer service, the method continues. A community-based answer service is an answering service where members ask other members, some of whom are self-professed experts, for answers to all kinds of questions. Questions may vary widely in scope. They may be purely factual: "What is the population density of Hong Kong?" They may be trivia: "Who starred in the Titanic?" They may be practical: "What is the best way to stop rain gutters from plugging up?" Members of the community are given either quantitative or qualitative incentives to provide relevant answers. For example, when a member has provided a large number of answers that have been accepted, this member receives an incentive. An example of a qualitative incentive would be a title such as master, as opposed to a lesser title like novice. These titles could be listed in the members profile, with community summaries, or in his submissions. An example of a quantitative incentive would be a number reflecting the accumulation of beneficial performance points such as "1032 total points."

In step 325 the user may indicate that he would like to post his question to a community-based answer service. This input may include an indication of one or more categories for the question, an audience for the question, and an offered number of points for an acceptable answer. The points offered for an acceptable answer entice other members to attempt answering the question in order to receive incentives.

A category is a subject area within the taxonomy of all possible subjects, to which a question may be related. For example, a question about tissues may be placed to a category on personal hygiene, or to a category on biological science. Likewise a question about bowling may be posted to a recreational sports category and to a trivia category. One or more categories are preferably suggested to the first user, at the time that the question is posted to the community-based answering service. The categories suggested are based on correlation of the question with other questions within each category. The question, based on the selection of the first user, or the system, is then associated with one or more categories.

The audience for a question is the group of community members to whom the first user would like to address the question. Examples of audiences are: the entire community, the community of experts (or all people who are interested in a certain category), a social network within the community such as all those who are members of a buddy-list, all those who have achieved a certain level of honor within the community, etc.

Preferably, when the user elects to post his question to the community-based answer service in step 325, the user provides membership credentials, such as login, and password, before he is able to receive an answer from the community in step 332. In the event that the user is not yet a member, an account is created and initialized. Thus the determination of authority, may be made by authenticated users. Being a member allows a user to access separate information for members only such as: more detailed information on other members, questions or answers that are not yet authoritatively answered, etc.

In step 332, an answer is received from a community member regarding the open question. In step 334, the user who asked the question determines the authority of the answer. At a minimum this determination involves the question providers' subjective opinion of the answer provided. The determination may also consist of, or incorporate evaluation of the answer by a community or a super-user. When an answer is provided of sufficient authority, in step 336, then the answer and question are joined together and added to the database 315 of authoritative answers in step 338. The answers in the database then have achieved at least a certain level of authority based on member review of the answer provided, and upon the criteria for acceptable authority. Preferably, as mentioned above, a quantification of the authority is also provided in the database. In the event that the answer has insufficient authority, it is kept from the database, and the method returns to step 332 to await other answers for the question.

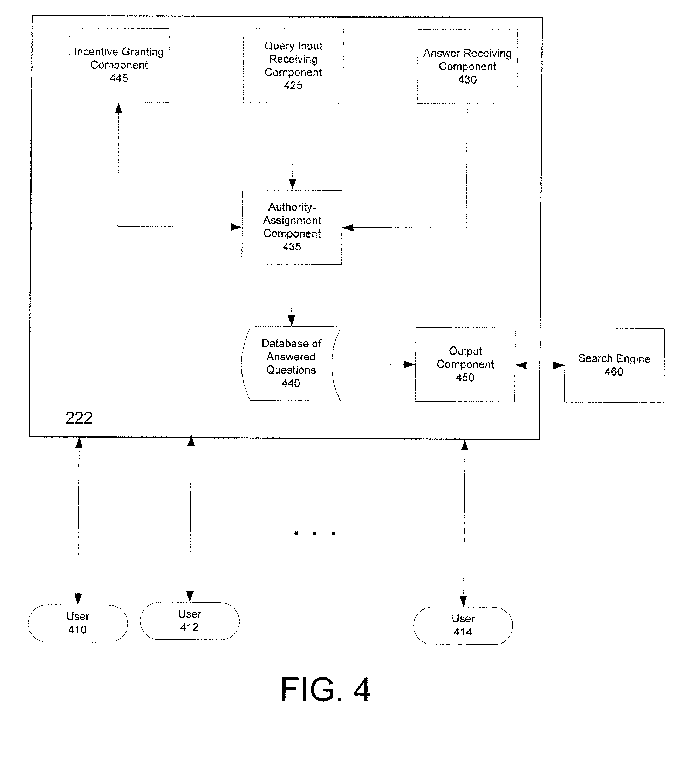

FIG. 4 shows a block diagram of a computer-implemented, community-based question answering service 222. At a macroscopic level, this service provides a search engine 460 with authoritative answers based on the interaction of a potentially very large number of voluntary users depicted by 410, and 412, through 414. This is achieved through the use of a query input receiving component 425, an answer receiving component 430, an incentive granting component 445 and an authority-assignment component 435, resulting in a database of answered questions 440, and an output component 450.

The query input receiving component 425 accepts questions from users who have decided to let the community attempt to answer a question as discussed above in connection with step 325. This component provides an interface to the users who become members of the community, to properly enter questions that are open, and to make these available to members of the community. The proper entering of questions involves acceptance of question related data such as member, a number of offered points, an audience for the question, and an amount of time for the question to remain open. Questions may be made available to the members of the community, for example, by publishing categories through an aggregation output such as an XML feed, or by allowing members to add certain questions to their own aggregation intput, such as a user syndication XML feed.

The answer receiving component 430 accepts potential answers from community members, and routes these answers for consideration to the proper groups of members. At first an answer is published only to the person who posted the associated question. In the event that evaluation is requested by other members such as a super-user, or a community, this component provides the answer to those members as well.

The authority-assignment component 435 provides the authoritative answers to the database of answered questions 440. This component evaluates criteria indicative of authority, and determines when the answers have sufficient authority to be included in the database. This component optionally includes an evaluation receiving subcomponent which solicits, computes, and provides evaluation results concerning an answer. This subcomponent may receive evaluation inputs from the member who posted the question, or from a community within the service, or a super-user.

The incentive granting component 445 provides incentives for members who exhibit beneficial behavior. This component preferably includes a point system. Points serve as a kind of artificial currency created by the community-based answering service. Members receive a certain number of points when they join to pay members, through transferred points, for answers to their questions. Members who answer, receive points either from the other users, or from the system, or both. Members who do a great job, gain prestige and reputation through the points. The table below is an example of point assignments which could provide an appropriate incentive system for members. As noted above, other incentive systems could be implemented to motivate members to participate meaningfully.

| Action | Point | Origin of Points |
|---|---|---|
| Answer Question | 1 | System |
| Get BestAnswer | 25 | System |
| Get BestAnswer | QuestionBet | Asker |
| Participate in CommunityVote | 1 | System |
| Correctly choose CommunityVote | 5 | System |
| AbandonQuestion | -10 | Asker |
| Log Into System | 1/day | System |

The incentive granting component preferably contains an anti-gaming subcomponent. This subcomponent is necessary in order to prevent mischievous members from "gaming" the system and essentially devaluing the currency. One example of a way to "game" the system is for hostile members to create a cluster of IDs that answer each others questions. Another gaming strategy is to create a cluster of unused IDs that transfer points to a first ID to give artificial prestige. The anti-gaming subcomponent may involve one or more of the following techniques: putting all questions to a majority vote, use of automation to detect gaming, scanning the logs to detect clustered users, automatically removing offending points, creating temporary power-users to approve best answers and to report fake users, listing on any person's profile page a list of who has answered their questions and a prompt to "report this fake user", and use of CAPTCHA's at time of question submission.

In addition to the prestige or honor associated with high point totals, the system may optionally contain a reward subcomponent which enables users who have earned a sufficient point total to receive a reward. This could be implemented in such a way that the reward is a bonus for those who have achieved a point level without diminishing points earned. Alternatively points could be traded for rewards. The rewards could include discounts on merchandise or services, coupons for use in consumer trade, free merchandise or services, or virtual property. Examples of virtual properties are permits for temporary computer services, "cheat codes" for video games, or tokens or possessions that give a higher level of video game achievement, capability, or goal possession.

The output component 450 provides the authority association of the authoritative database 440 to the search engine 460. The output component may provide authority association by the inclusion of a screening subcomponent that prevents answers of insufficient authority from being provided to the search engine. The output subcomponent may also contain an authority-assignment subcomponent that associates a quantification of determined authority with an authoritative answer. Various methods of quantifying authority have been discussed above.

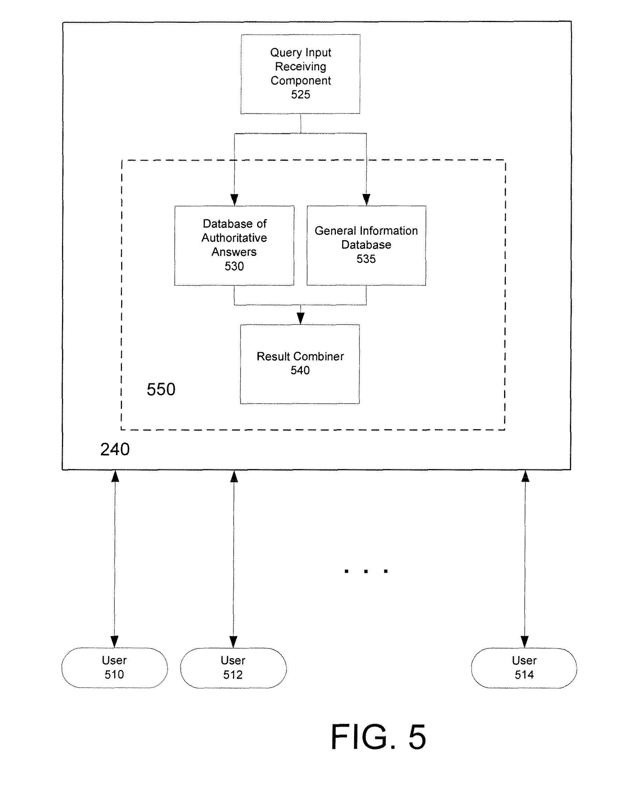

FIG. 5 shows a block diagram of an alternative computer-implemented information search service 240. At a top level, this service provides a search engine incorporating a component which receives a query from a typical user 510, through a query input receiving component 525. The service then provides a result through a query result generation component 550. The query result generation component 550 includes a database of authoritative answers 530, a general information database 535, and a result combiner 540. These components typically reside together on a single server, or upon a bank of general information search service servers, but may be implemented in part as an agent on a user computer, or on one or more community-based servers, or a combination of the above.

This service is provided for potentially a very large number of voluntary users depicted by 510, and 512, through 514, who are not necessarily members of the question answering service. The query input receiving component 525 accepts questions from users who have decided to make use of the improved general information search service of the present invention. This component provides an interface to the users, to receive their queries. As stated previously, these queries may either be in the form of a string of keywords, or a natural language sentence. Preferably, these queries are in the form of a natural language question, because this allows greater information to aid in the search of previously answered questions that may be provided to the user. The query receiving component has an interface that extends to a typical user 510.

The database of authoritative answers 530, provides a first output as a result of the received query being analyzed and compared against the authoritatively answered questions. As described in detail above, these authoritatively answered questions were not entered into the database unless there was a minimum level of independent human review that the authority of the answer is of an acceptable level. Preferably this authority is also quantified in the database in the form of a grading system, fraction indicating acceptability, rating, status of the person within the community, results of a community vote, or opinion of at least one community expert regarding the answer. Such quantifications of authority may advantageously be provided to the result combiner to enhance the organization of the disparate data sources for presentation to the user.

The general information database 535 provides a second output as a result of the received query being analyzed and compared against the information that is generally available on the network, as is well-known in the art. This database is queried as a result of the query input received by component 525, and may make use of the parser or parsers that were used to query database 530. Alternatively, this database may be queried independently making use of one or more similar parsers that operate on the same query input received by component 525.

The result combiner component 540 integrates the first output that was generated as a result of the query from the database of authoritative answers 530, and the second output that was generated as a result of the query of the general information database 535. This result combiner component preferably contains an invitation subcomponent which provides a link together with an invitation to post the query or a related question to the community-based answering service. One or more suggested categories, and the number of experts in this subject area who belong to the community, or the average waiting time for a reply may be integrated into this invitation. Thus, if the user is unsatisfied with the integrated response, a convenient method to obtain an authoritative answer is provided.

The result combiner component 540, in one embodiment, preferably contains also an output subcomponent which allows the data generated by the service to be presented in an orderly fashion. This subcomponent provides a first list based on the first output, abstracting the correlation of the query with entries in the general information database, and a second list, based on the second output, abstracting the correlation of the query with entries in the community-based information database. The first list is ultimately presented to the user in a first area of the user interface of the user who input the query. The second list is ultimately presented to the user in a second area of the user interface. This allows the user to separate the information from the disparate sources, and easily assess the relative merits of the information provided by the two databases. The result combiner component may also be enhanced with an authority output subcomponent which provides at least one field within the second list indicating the authority of at least one item in the result provided to the user interface. This may take the form of an authority weighting or ranking of each abstracted item, or a field indicating the strength of authority of the entire second list. This field may be embodied in a grade, fraction indicating acceptability of the reply, number of stars out of 5, status of the person within the community who provided the answer, results of a community vote, or opinion of a community expert regarding the answer.

Alternatively, in another embodiment, the result combiner component 540 contains also a list integration subcomponent which allows the data generated by the service to be presented in a unified fashion. This subcomponent integrates into one list the entries of the first list based on the first output, with the second list, based on the second output. The first list is generally ordered by strength of information match alone, but there may be two criteria that may be used to order the second list: strength of information match, and strength of authority as quantified within the database of authoritative answers 530. Thus there are three independent criteria that may be weighted differently in blending the lists into a single presented list: strength of information match from list 1, strength of information match for list 2, and strength of authority from list 2. In a first embodiment, quantified authority is not used or required, but strength of match alone is weighted to put the two lists on a single scale to combine the lists. Other embodiments may perform a similar weighting based on any 2 or three of these criteria to perform the integration. The result combiner component may also be enhanced by containing an authority output subcomponent which provides at least one field within the combined list indicating the authority of at least one item in the result provided to the user interface. This may take the form of an authority weighting or ranking of each abstracted item that came from the second list, or a field indicating the strength of authority in the elements which came from the second list. This field may be embodied in a grade, fraction indicating acceptability of the reply, number of stars out of 5, status of the person within the community who provided the answer, results of a community vote, or opinion of a community expert regarding the answer.

Thus, it can be seen that the present invention provides users with a system and method for obtaining answers from a search service that will more likely answer the users question.

Alternative embodiments and implementations of the present invention will become apparent to those skilled in the art to which it pertains upon review of the specification, including the drawing figures. Accordingly, the scope of the present invention is defined by the appended claims rather than the foregoing description.

## Claims

1. A computer-implemented method of providing authority association for answers available to a general information search, using a community-based answering service, comprising:
obtaining a query input from a user;
using said query input, obtaining a first search result from a database of previously answered questions;
providing the results of said first search to said user;
receiving a user input to indicate that a question related to said query input should be posted to a community-based answering service;
receiving an answer from the community;
determining authority of said answer; and
conditionally providing an information search input comprising said question and said answer, as input into a second search result if said answer has sufficient authority.

2. The method of claim 1, wherein said authority determining step comprises evaluation of said answer by at least one person chosen from the group consisting of:
said user, a community, and a super-user.

3. The method of claim 1, further comprising associating said question with a category.

4. The method of claim 1, wherein said question is posted to a set of people chosen from the group consisting of: a social network, a set of community experts, and the entire community.

5. The method of claim 1, wherein said information search input further comprises a quantification of determined authority.

6. The method of claim 1, wherein said first search result further comprises a result from a general information search.

7. A computer-implemented, community-based question answering service comprising:
a query input receiving component that receives a query from a first member of the service;
an answer receiving component that receives at least one answer from a second member of the service;
an incentive granting component that provides incentives to participants for answering questions;
an authority-assignment component that determines authority of at least one received answer;
a database of answered questions in communication with said authority-assignment component;
and an output component that provides authority-associated information to a search engine.

8. The service of claim 7, wherein said authority-assignment component comprises an evaluation receiving subcomponent for said at least one answer that receives an input from at least one person chosen from the group consisting of: said user, a community, and a super-user.

9. The service of claim 7, wherein said output component comprises a screening subcomponent which screens answers of insufficient authority from output to said search engine.

10. The service of claim 7, wherein said output component comprises an authority-assignment subcomponent which associates a quantification of determined authority with said answer.

11. The service of claim 7, wherein said incentive granting component comprises a point system indicative of beneficial behavior.

12. The service of claim 11, wherein said incentive granting component comprises a reward subcomponent which enables a user who has earned a sufficient point total to receive a reward chosen from the group consisting of discounts, coupons, services, and virtual property.

13. A computer-implemented information search service comprising:
a query input receiving component and a query result generation component, wherein said query result generation component comprises:
a general information database producing a first output, said first output comprising search results from a general information-based search; and
a database of authoritative answers producing a second output, said second output comprising search results from a search of a community-based database of authoritative answers; and
a result combiner component which combines said first output and said second output to produce said query result.

14. The service of claim 13, wherein said query input receiving component comprises a parser which analyzes natural language questions.

15. The service of claim 13, wherein said query input receiving component comprises a parser which analyzes a string of keywords.

16. The service of claim 13, wherein said query result combiner component comprises an invitation subcomponent which provides an offer to post a related question to a computer-implemented community-based question answering service.

17. The service of claim 13, wherein said result combiner component comprises an output subcomponent which produces a first list from said first output, to be provided in a first area of a user interface, and a second list from said second output, to be provided in a second area of said user interface.

18. The service of claim 17, wherein said result combiner component comprises an authority output subcomponent providing at least one field within said second list indicating authority of at least one item in the result provided to said user interface.

19. The service of claim 13, wherein said result combiner component comprises a list integration subcomponent which integrates entries from said first output and said second output to be provided in a single area of a user interface.

20. The service of claim 19, wherein said list integration subcomponent comprises an authority output subcomponent providing at least one field within said list indicating authority of at least one item in the result provided to said user interface.
